# EUROPEAN PATENT APPLICATION

(11) **EP 1 992 666 A1**
(43) Date of publication of application: **19.11.2008**
(21) Application number: 07714208.1
(22) Date of filing: 08.02.2007
(51) Int. Cl.: C08L 101/12, C08J 5/00, C08K 5/51, C08L 69/00, G02F 1/1333

(54) **THERMOPLASTIC RESIN COMPOSITION AND LIQUID CRYSTAL DISPLAY PART OR INFORMATION RECORDING MEDIUM PART USING THE COMPOSITION**

(30) Priority: 13.02.2006 JP 2006035376; 20.02.2006 JP 2006042206; 20.02.2006 JP 2006042207
(71) Applicant: Polyplastics Co., Ltd., Tokyo 108-8280 (JP)
(72) Inventor: KUMAI, Toshiko, Fuji-shi, Shizuoka 4168533 (JP); WATANABE, Kazufumi, Fuji-shi, Shizuoka 4168533 (JP); USHIJIMA, Ryuji, Fuji-shi, Shizuoka 4168533 (JP)
(74) Representative: Peel, James Peter
(86) International application number: PCT/JP2007/052661
(87) International publication number: WO 2007/094381

(57) **Abstract**

The present invention provides a thermoplastic resin composition having high flowability, has high dimensional stability like being free from deformation after molding, shows excellent rigidity, impact resistance, and heat resistance, and is suitable for thin-wall molded article. Specifically the thermoplastic resin composition is composed of: 100 parts by weight of a resin composition structured by (A) 91 to 99% by weight of a thermoplastic resin having a specified melt viscosity and (B) 1 to 9% by weight of a liquid crystalline polymer; and 0.001 to 2 parts by weight of (C) a specified phosphorus oxo acid monoester or diester, wherein the (B) liquid crystalline polymer is dispersed as particles, and the ratio of the melt viscosity of (A) component to (B) component is within a specified range. The present invention also provides a liquid crystal display component and an information recording media component.

## Description

### Technical Field

The present invention relates to a thermoplastic resin composition composed of a thermoplastic resin which does not form anisotropic melt phase and a liquid crystalline polymer capable of forming anisotropic melt phase, and further relates to a liquid crystal display component used in display equipment of electronic products such as computer, TV, and monitor, and to an information recording media component used in electronic products such as cell-phone and computer.

### Background Art

Trend towards increased functions and performances of digital equipment such as cell-phone, digital camera, and handy-terminal has made striking progress in recent years. Structures common to those kinds of equipments have liquid crystal displays and the information recording media.

Generally a liquid crystal display (LCD) is structured largely by two parts: the LCD panel part composed of a glass substrate, a transparent electrode, a liquid crystal, and a color filter; and the backlight unit composed of a reflector which provides backlighting, a fluorescent lamp, a light guide panel, a diffusion sheet, a prism sheet, and a backlight frame which functions as a reflector while supporting all components. The backlight frame has a shape of rectangular face functionally provided with an opening thereon. Larger percentage of the opening allows assuring larger area of liquid crystal face relative to the size of the liquid crystal display itself. Furthermore, thinner thickness of the rectangular face allows thinning the liquid crystal display itself. Consequently, the general trend is the increase in the percentage of the opening and the decrease in the thickness of the rectangular face.

As the information recording media, various kinds of specifications are commercially available, including SD card and compact flash, further smart media and memory stick. Those kinds of information recording media are small in size, and have great memory capacity of over several MBs.

Although these information recording media have already had a compact size, it is crucial that they decrease the space for mounting recording media through the increase in functions and performances, and decrease in sizes for the apparatus using the recording media. Furthermore, these information recording media are required to attain further miniaturization and thinning of their size.

Accordingly, the materials used in liquid crystal display components and information recording media are requested to have high flowability, rigidity, and impact resistance so as to perform effectively their functions with thin thicknesses. Furthermore, they should have heat resistance, dimensional stability, and fire retardancy so as to endure heat generated through backlighting. A typical material having such characteristics was polycarbonate resin.

To attain the above purposes, or to perform functions of frame or functions of recording media effectively with thin thicknesses, the materials for liquid crystal display components or for information recording media are requested to have high dimensional stability like being free from deformation after molding, high flowability and rigidity, and impact resistance. In addition, they have to have heat resistance, dimensional stability, and fire retardancy so as to endure heat generated through backlighting. A typical base material having such characteristics was polycarbonate resin.

Compared with other resins, the polycarbonate resin has excellent low-temperature impact resistance, self-extinguishing performance, electrical properties, transparency, dimensional stability, and thermal stability and thus has been widely used in the fields of automatic office equipment, electric and electronic products as engineering plastics. However, since the polycarbonate resin has low flowability, there have been an increasing number of situations that cannot be coped with frames and information recording media which show increasingly reduction in thickness. To compensate such poor flowability, there have been applied forming at high temperature and forming at high speed and high pressure during injection molding. The use range of those kinds of forming, however, is limited because the resin induces thermal decomposition or excessive residual stress by heating the resin.

On the other hand, alloying of polycarbonate resin with ABS resin or the like has been studied as a method to improve flowability from a material standpoint. For example, JP-A 11-293102 disclosed the method of obtaining a polycarbonate/ABS alloy composition having excellent molding performance by mixing a polycarbonate resin with an ABS graft copolymer and two kinds of acrylonitrile/styrene copolymers in which the molecular weight distribution is identified, in a specified mixing ratio. The composition obtained, however, cannot give satisfactory heat resistance.

As disclosed in JP-A 2002-249656, a resin composition prepared by mixing a polycarbonate resin with a liquid crystalline resin exhibited good thin-wall moldability. However, unless the mixing ratio is adequately regulated, the resin cannot satisfy functions as a product because fracture at weld part by the decrease in the weld strength, delamination of surface layer of the molded article, and the like are generated.

### Disclosure of the Invention

The present invention solves the above-mentioned problems of the conventional art, and provides a thermoplastic resin composition having high flowability and high dimensional stability like being free from deformation after molding, having excellent rigidity, impact resistance, heat resistance, and the like, and effectively performing the functions as liquid crystal display components and information recording media components with thin thicknesses thereof. Furthermore, the present invention provides a material for liquid crystal display component that has large percentage of the opening on the rectangular face thereof, and effectively performs the functions of frame with thin thickness thereof. In addition, the present invention provides a material for information recording media that can effectively perform the functions of recording media with thin thickness thereof.

To attain the above purposes, the inventors of the present invention have conducted detail investigations and studies about materials having high flowability, high rigidity, and high heat resistance, and have found the applicability to decreased thickness by mixing a specified amount of a liquid crystalline polymer with a thermoplastic resin which shows a specified melt viscosity and which does not form anisotropic melt phase, and by mixing a specified phosphorus oxo acid monoester or diester, and further by controlling the melt viscosity ratio of the thermoplastic resin to the liquid crystalline polymer within a specified range, thereby having perfected the present invention.

Furthermore, the inventors of the present invention have found the applicability to decreased thickness by adopting the above resin composition as materials for the liquid crystal display component or the information recording media component, without causing problems of fracture at the weld part, delamination of surface layer of the molded article, and the like, described in JP-A 2002-249656, thereby having perfected the present invention.

That is, the present invention provides a thermoplastic resin composition comprising: 100 parts by weight of a resin composition comprising (A) 91 to 99% by weight of a thermoplastic resin which shows 100 to 300 Pa·s of melt viscosity, determined by a capillary rheometer with a nozzle having 1 mm in inner diameter and 20 mm in length, at 300°C at 1000 sec⁻¹ of shear rate, and which does not form anisotropic melt phase, and (B) 1 to 9% by weight of a liquid crystalline polymer being capable of forming anisotropic melt phase; and 0. 001 to 2 parts by weight of (C) one or two or more of phosphorus oxo acid monoester and diester, represented by the formulas (I) and (II), the (B) liquid crystalline polymer being dispersed as particles in the thermoplastic resin composition, and the thermoplastic resin composition having 3.2 to 4.0 of melt viscosity ratio of (A) component to (B) component, (Aη)/(Bη), determined by a capillary rheometer with a nozzle having 1 mm in inner diameter and 20 mm in length, at 300°C at 1000 sec⁻¹ of shear rate,

(X)ₙP(=O) (OR)₃₋ₙ (I)

(X)ₙP(OR)₃₋ₙ (II)

(in which: n is 1 or 2; X is a hydrogen atom, a hydroxyl group, or a monovalent organic group, plural X's may be the same as or different from one another; R is a mono- or di-valent organic group, plural R's may be the same as or different from one another).

The present invention provides a liquid crystal display component, manufactured by injection-molding the thermoplastic resin composition according to any of claims 1 to 5, having 3.2 to 4.0 of melt viscosity ratio of (A) component to (B) component, (Aη)/(Bη), determined by a capillary rheometer with a nozzle having 1 mm in inner diameter and 20 mm in length, at 300°C at 1000 sec⁻¹ of shear rate, wherein the liquid crystal display component having a rectangular face has a thickness thereof ranging from 0.3 to 3 mm, and has a desired opening on the rectangular face at an opening area ratio to the total area of the rectangular face within the range of 30 to 95%.

The present invention provides an information recording media component, manufactured by injection-molding the thermoplastic resin composition, according to any of claims 1 to 5, having 3.2 to 4.0 of melt viscosity ratio of (A) component to (B) component, (Aη)/(Bη), determined by a capillary rheometer with a nozzle having 1 mm in inner diameter and 20 mm in length, at 300°C at 1000 sec⁻¹ of shear rate, wherein the information recording media component has a rectangular face having a ratio of the miner side to the major side of the rectangular face within the range of 0.3 to 1.0, and having a thickness thereof ranging from 0.3 to 3 mm.

### Detailed Description of the Invention

The present invention is described below in detail. The (A) thermoplastic resin which does not form anisotropic melt phase, used in the present invention, has to be a thermoplastic resin capable of being melted and formed at 300°C. The phrase "capable of being melted and formed at 300°C" means that the melt viscosity satisfies the range of 100 to 300 Pa·s determined by a capillary rheometer with a nozzle having 1 mm in inner diameter and 20 mm in length, at 300°C at 1000 sec⁻¹ of shear rate, and that the resin is capable of processing without deforming to the extent of unacceptable properties by deterioration.

Examples of the corresponding thermoplastic resin (A) include: polyolefin-based (co)polymers such as polyethylene, polypropylene or poly-4-methyl-1-pentene; polyester-based resins such as polyethylene terephthalate resin, polybutylene terephthalate resin or polycarbonate resin; polyamide-based resin; ABS resin; polyarylene sulfide resin; polyacrylate; a resin composed mainly of the above resins, and the like. As of these, preferred ones are polyester-based resin such as polyethylene terephthalate resin, polybutylene terephthalate resin or polycarbonate resin, and specifically preferred one is polycarbonate resin having relatively low molding shrinkage and linear expansion coefficient.

In the present invention, the polycarbonate resin preferably used as the (A) thermoplastic resin includes an aromatic homo- or co-polycarbonate having a carbonate structure and being prepared by the reaction between an aromatic divalent phenol-based compound and phosgene, or diester carbonate, and the like. Applicable aromatic divalent phenol-based compound includes 2,2-bis(4-hydrogyphenyl)propane, 2,2-bis(4-hydroxy-3,5-dimethylphenyl)propane, bis(4-hydroxyphenyl)butane, 1,1-bis(4-hydroxyphenyl)ethane, 2,2-bis(4-hydroxyphenyl)butane, 2,2-bis(4-hydroxy-3,5-diphenyl)butane, 2,2-bis(4-hydroxy-3,5-diethylphenyl)propane, 1,1-bis(4-hydroxyphenyl)cyclohexane, and 1-phenyl-1,1-bis(4-hydroxyphenyl)ethane. These compounds can be used separately or as a mixture of them. As of these, 2,2-bis(4-hydroxyphenyl)propane is preferred.

The (B) liquid crystalline polymer used in the present invention means a melt-formable polymer having the property capable of forming optical anisotropic melt phase, wherein the polymer has a property of giving regular parallel arrangement of the polymer molecular chain under a shearing force in a molten state. Such polymer molecule normally has thin, long, and flat shape, and has significantly high rigidity along the major axis of the molecule, and the polymer of that molecule normally has pluralities of chain extension bonds in coaxial or parallel relation with each other. The property of anisotropic melt phase can be determined by an ordinary polarization test using crossed polarizers. Specifically, determinations of anisotropic melt phase can be made by using a Leitz polarization microscope, placing the melt sample on a Leitz hot stage, and observing the sample at 40 magnifications under a nitrogen atmosphere. The liquid crystalline polymer which can be applied to the present invention exhibits optical anisotropy normally allowing the polarized light to pass through between the tested crossed polarizers even in a melt and stationary state.

Although the above (B) liquid crystalline polymer is not specifically limited, preferred one is aromatic polyester or aromatic polyester amide, and there is included a polyester which contains aromatic polyester or aromatic polyester amide within partially the same molecular chain. Applied ones of above (B) liquid crystalline polymer have inherent viscosity (I.V.) of at least about 2.0 dl/g, preferably in the range of 2.0 to 10.0 dl/g, when they are dissolved in pentafluorophenol at 60°C by a concentration of 0.1% by weight.

Specifically preferred aromatic polyester or aromatic polyester amide as the (B) liquid crystalline polymer applicable to the present invention includes aromatic polyester and aromatic polyester amide, having at least one compound selected from aromatic hydroxycarboxylic acid, aromatic hydroxyamine and aromatic diamine, as a structural component.

Further specific description of them is:
(1) polyester composed mainly of one or more of aromatic hydroxycarboxylic acid and a derivative thereof;
(2) polyester composed mainly of (a) one or more of aromatic hydroxycarboxylic acid and a derivative thereof, (b) one or more of aromatic dicarboxylic acid, alicyclic dicarboxylic acid, and a derivative thereof, and (c) one or more of aromatic diol, alicyclic diol, aliphatic diol, and a derivative thereof;
(3) polyester amide composed mainly of (a) one or more of aromatic hydroxycarboxylic acid and a derivative thereof, (b) one or more of aromatic hydroxyamine, aromatic diamine, and a derivative thereof, and (c) one or more of aromatic dicarboxylic acid, alicyclic dicarboxylic acid, and a derivative thereof; and
(4) polyester amide composed mainly of (a) one or more of aromatic hydroxycarboxylic acid and a derivative thereof, (b) one or more of aromatic hydroxyamine, aromatic diamine, and a derivative thereof, (c) one or more of aromatic dicarboxylic acid, alicyclic dicarboxylic acid, and a derivative thereof, and (d) one or more of aromatic diol, alicyclic diol, aliphatic diol, and a derivative thereof. The above structural components may be used together with a molecular weight adjuster, if desired.

Preferred examples of the compounds structuring the (B) liquid crystal polymer applicable to the present invention include: aromatic hydroxycarboxylic acids such as p-hydroxybenzoic acid or 6-hydroxy-2-naphthoic acid; aromatic diols such as 2,6-dihydroxynaphthalene, 1,4-dihydroxynaphthalene, 4,4'-dihydroxybiphenyl, hydroquinone, resorcin, or a compound represented by the following formula (V) or the following formula (VI); aromatic dicarboxylic acids such as terephthalic acid, isophthalic acid, 4,4'-diphenyldicarboxylic acid, 2,6-naphthalenedicarboxylic acid or a compound represented by the following formula (VII); and aromatic amines such as p-aminophenol or p-phenylenediamine. 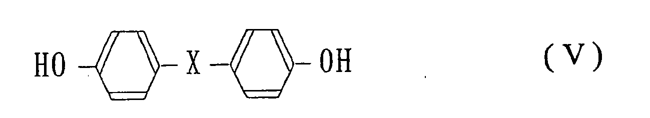 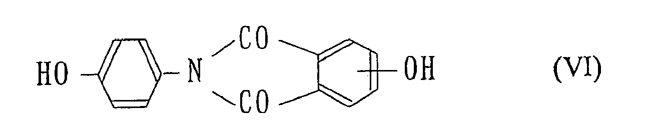 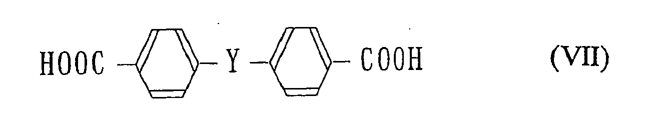 in which: X is a group selected from alkylene (C₁-C₄), alkylidene, -O-, -SO-, SO₂-, -S-, and -CO-; and Y is a group selected from -(CH₂)ₙ- (n=1 to 4) and -O(CH₂)ₙO- (n=1 to 4).

Specifically preferred (B) liquid crystalline polymer applied to the present invention is an aromatic polyester which has p-hydroxybenzoic acid and 6-hydryxy-2-naphthoic acid as main structural components.

A molded article in which the (B) liquid crystalline polymer dispersed in microscopic order in fibrous form or needle shape into the matrix phase of the (A) thermoplastic resin can be manufactured under a shearing force generated by injection molding of a thermoplastic resin composition prepared by kneading both of the above (A) thermoplastic resin and (B) liquid crystalline polymer in an ordinary extruder, and by injection molding the thermoplastic resin composition in which the (B) liquid crystalline polymer dispersed as particles in the matrix phase of the (A) thermoplastic resin. If, however, the amount of the (B) liquid crystalline polymer is larger than the amount of the (A) thermoplastic resin, the matrix phase becomes inverse. Even when the matrix phase does not invert, if the amount of (B) liquid crystalline polymer is large, the amount of liquid crystalline polymer existing in the weld part of the molded article increases, which is not preferable because of inducing the decrease in the weld strength. Although the fibrous dispersion of the (B) liquid crystalline polymer in the (A) thermoplastic resin, as described above, is important in order to reinforce the (A) thermoplastic resin, the fibrous structure of the (B) liquid crystalline polymer at near the surface layer of the molded article is not preferable because of surface layer' delamination.

To solve the problem, it is necessary for the (B) liquid crystalline polymer to maintain a granular dispersion state at near the surface layer of the molded article, while giving a fibrous dispersion state inside the molded article. To satisfy all the requirements of thin-wall flowability, rigidity, weld strength, and surface layer's delamination, the extremely strict control of the melt viscosity of the (A) thermoplastic resin and the additive amount of the (B) liquid crystalline polymer are needed. To do this, in the present invention, the (A) thermoplastic resin is required to have the melt viscosity from 100 to 300 Pa·s, preferably from 160 to 180 Pa·s, determined by a capillary rheometer with a nozzle having 1 mm in inner diameter and 20 mm in length, at 300°C at 1000 sec⁻¹ of shear rate, and the (B) liquid crystalline polymer is required to have the mixing rate of 1 to 9% by weight to 91 to 99% by weight of the (A) thermoplastic resin. If the melt viscosity of the (A) thermoplastic resin is less than 100 Pa·s, the weld strength becomes deteriorated, and if the melt viscosity thereof exceeds 300 Pa·s, the surface layer may delaminate. If the mixing amount of the (B) liquid crystalline polymer is less than 1% by weight, the target thin-wall flowability cannot be attained, and if the mixing amount thereof exceeds 9% by weight, there arise problems of weld strength and surface layer's delamination.

Also the liquid crystal display component or the information recording media component according to the present invention uses similar composition to that described above.

When the (A) thermoplastic resin is polycarbonate resin, the preferable viscosity average molecular weight is from 17500 to 18900.

The ratio of the melt viscosity of the (A) component to the (B) component has also an important value. When the melt viscosity ratio of (A) component to (B) component, (Aη)/(Bη), determined by a capillary rheometer with a nozzle having 1 mm in inner diameter and 20 mm in length, at 300°C at 1000 sec⁻¹ of shear rate, is within the range of 3.2 to 4.0, thin-wall flowability, weld strength, and surface layer's delamination will be satisfied at the same time.

Further, according to the present invention, as described above, in order to make the (B) liquid crystalline polymer fibrous during molding, the addition of a phosphorus compound is needed. Specifically when the (A) thermoplastic resin which does not form anisotropic melt phase is polycarbonate resin, the liquid crystalline polymer and the polycarbonate resin do not reach an insular dispersion state, and the liquid crystalline polymer does not become fibrous even in the injection molding, and thus the addition of phosphorus compound gives significant effect. The phosphorus compound is the (C) phosphorus oxo acid monoester and diester, which are represented by the formulas (I) and (II).

(X)ₙP(=O) (OR)₃₋ₙ (I)

(X)ₙP(OR)₃₋ₙ (II)

in which: n is 1 or 2; X is a hydrogen atom, a hydroxyl group, or a monovalent organic group, plural X's may be the same as or different from one another; R is a mono- or di-valent organic group, plural R's may be the same as or different from one another.

The above phosphorus compounds generally correspond to a phosphonate compound, a phosphinate compound, a phosphonite compound, a phosphinite compound, and an organic phosphorus compound containing those structural elements in the molecule.

Examples of the phosphonate compound include dimethyl phosphonate, diethyl phosphonate, dibutyl phosphonate, di(ethylhexyl) phosphonate, didecyl phosphonate, dipalmityl phosphonate, distearyl phosphate, dilauryl phosphate, diphenyl phosphate, dibenzyl phosphate, ditoluyl phosphate, di(nonylphenyl) phosphate, dioleyl phosphate, dimethylmethyl phosphate, diethylmethyl phosphate, di(ethylhexyl)methyl phosphate, dipalmitylmethyl phosphate, distearylmethyl phosphate, dilaurylmethyl phosphate, diphenylmethyl phosphate, dimethylphenyl phosphate, diethylphenyl phosphate, di(ethylhexyl)phenyl phosphate, dipalmitylphenyl phosphate, distearylphenyl phosphate, dilaurylphenyl phosphate, diphenylphenyl phosphate, and dibenzylphenyl phosphate.

Examples of the phosphinate compound include methyl phosphinate, ethyl phosphinate, butyl phosphinate, ethylhexyl phosphinate, palmityl phosphinate, stearyl phosphinate, lauryl phosphinate, phenyl phosphinate, benzyl phosphinate, toluyl phosphinate, nonylphenyl phosphinate, oleyl phosphinate, ethylmethyl phosphinate, ethyldimethyl phosphinate, (ethylhexyl)methyl phosphinate, (ethylhexyl) dimethyl phosphinate, palmitylmethyl phosphinate, palmityldimethyl phosphinate, stearylmethyl phosphinate, stearyldimethyl phosphinate, laurylmethyl phosphinate, lauryldimethyl phosphinate, phenylmethyl phosphinate, ethylphenyl phosphinate, (ethylhexyl)phenyl phosphinate, palmitylphenyl phosphinate, stearylphenyl phosphinate, stearyldiphenyl phosphinate, laurylphenyl phosphinate, lauryldiphenyl phosphinate, phenylphenyl phosphinate, and benzylphenyl phosphinate.

Examples of the phosphonite include dimethyl phosphonite, diethyl phosphonite, dibutyl phosphonite, di(ethylhexyl) phosphonite, didecyl phosphonite, dipalmityl phosphonite, distearyl phosphonite, dilauryl phosphonite, diphenyl phosphonite, dibenzyl phosphonite, ditoluyl phosphonite, di(nonylphenyl) phosphonite, dioleyl phosphonite, dimethylmethyl phosphonite, diethylmethyl phosphonite, di(ethylhexyl)methyl phosphonite, dipalmitylmethyl phosphonite, distearylmethyl phosphonite, dilaurylmethyl phosphonite, diphenylmethyl phosphonite, dimethylphenyl phosphonite, diethylphenyl phosphonite, di(ethylhexyl)phenyl phosphonite, dipalmitylphenyl phosphonite, distearylphenyl phosphonite, dilaurylphenyl phosphonite, diphenylphenyl phosphonite, and dibenzyl phosphonite.

Examples of the phosphinite include methyl phosphinite, ethyl phosphinite, butyl phosphinite, ethylhexyl phosphinite, palmityl phosphinite, stearyl phosphinite, lauryl phosphinite, phenyl phosphinite, benzyl phosphinite, toluyl phosphinite, nonylphenyl phosphinite, oleyl phosphinite, ethylmethyl phosphinite, ethyldimethyl phosphinite, (ethylhexyl)methyl phosphinite, (ethylhexyl)dimethyl phosphinite, palmitylmethyl phosphinite, palmityldimethyl phosphinite, stearylmethyl phosphinite, stearyldimethyl phosphinite, laurylmethyl phosphinite, lauryldimethyl phosphinite, phenylmethyl phosphinite, ethylphenyl phosphinite, (ethylhexyl)phenyl phosphinite, palmitylphenyl phosphinite, stearylphenyl phosphate, stearyldiphenyl phosphate, laurylphenyl phosphinite, lauryldiphenyl phosphinite, phenylphenyl phosphinite, and benzylphenyl phosphinite. As of these, a phosphonic acid ester represented by the formula (III) is preferably used.

H(OH)ₘP(=O)(OR')₂₋ₘ (III)

In which m is 0 or 1, and R' is a monovalent organic group.

As the phosphorus compound of (C), an organic compound containing the above-described phosphonate, phosphinate, phosphonite, and phosphinite structural elements within the molecule can also be used. Examples of that phosphorus compound of (C) are the following.

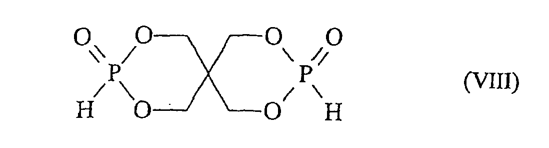

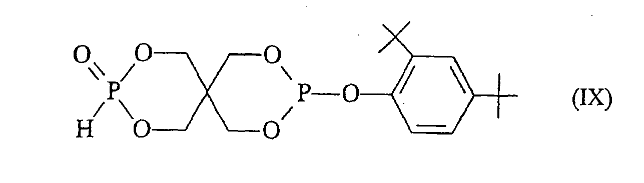

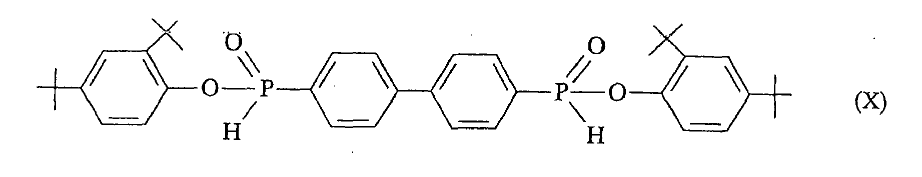

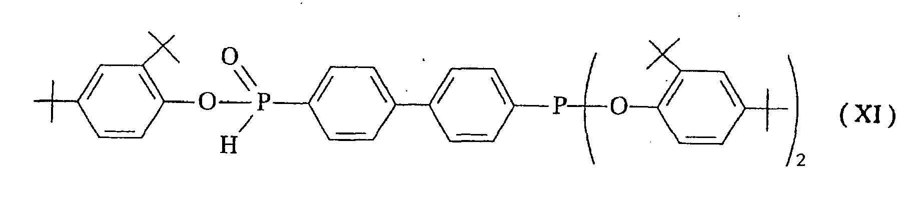

The mixing amount of the specific phosphorus compound (C) is within the range of 0.001 to 2 parts by weight, preferably 0.01 to 0.5 parts by weight to 100 parts by weight of the resin composition composed of 91 to 99% by weight of the (A) thermoplastic resin and 1 to 9% by weight of the (B) liquid crystalline polymer. If the mixing amount thereof is less than 0.001 parts by weight, the effect of making the liquid crystalline polymer fibrous during molding becomes small, and if the mixing amount thereof exceeds 2 parts by weight, the material physical properties become rather deteriorated.

Compositions prepared by adding additives such as nucleating agent, pigment such as carbon black, antioxidant, stabilizer, plasticizer, an internal lubricant, mold-lubricant, and fire-retardant agent to the thermoplastic resin composition to provide the respective desired characteristics are also the thermoplastic resin compositions defined by the present invention.

Manufacturing those types of thermoplastic resin compositions is conducted by mixing and kneading the respective components in the above-described compositional ratio. General practice is kneading the components in an extruder, and extruding therefrom in pellet form, and pellets are then injection-molded. The manufacturing method, however, is not limited to the extrusion by extruder. The information recording media component according to the present invention is easily molded by an ordinary molding method, such as injection molding, using the above composite resin compositions.

The liquid crystal display component or the information recording media component according to the present invention can be easily molded by an ordinary molding method such as injection molding, using the above thermoplastic resin composition.

Thus obtained molded article is the one in which the (B) liquid crystalline polymer dispersed in an insular state in the (A) thermoplastic resin. Since the molded article has 30 µm or smaller average major diameter of the (B) liquid crystalline polymer particles at the surface layer part within 50 µm depth from the surface of the molded article, has flowability being capable of sufficiently filling the mold even at a thin-wall thickness, and has high modulus of elasticity, an ultrathin molded article can be formed without delamination of resin skin layer at the surface of the molded article, and without inducing torsion deformation. Owing to the excellent moldability, in addition, the number of gates can be decreased compared with conventional products so that the weight reduction of runner becomes possible, which is extremely economical.

With the high shape (dimensional) stability, even a liquid crystal display component having 3 mm or smaller thickness and occupying 30 to 95% of the opening percentage to the total area of the rectangular face can be molded without delamination of resin skin layer at the surface of the molded article, and the display component shows good weld strength and does not induce torsion deformation. In addition, since the number of gates can be decreased due to the excellent moldability compared with conventional products, the weight reduction of runner becomes possible, thus being extremely economical.

Owing to the high shape (dimensional) stability, even an ultrathin molded article, specifically an information recording media component having a ratio of miner side to major side of the rectangular face within the range of 0.3 to 1.0, and having a thickness thereof ranging from 0.3 to 3 mm can be molded without delamination of resin skin layer at the surface of the molded article, and the display component shows good weld strength and does not induce torsion deformation. In addition, since the number of gates can be decreased due to the excellent moldability compared with conventional products, the weight reduction of runner becomes possible, thus being extremely economical.

With the above advantages, the molded article is most suitable for the material for a liquid crystal display component or an information recording media component which has been continuing to decrease in thickness in recent years. Thus, the molded article is useful for TV monitor, and further for materials for handheld information terminals such as digital camera, camera-integrated VTR, cell-phone, PDA or notebook computer.

### Examples

The present invention is described below in more detail, using the examples. The present invention, however, is not limited to these examples.

### Examples 1 to 5

There was prepared a pellet-blend using two kinds of polycarbonate resins (Panlite L1225L, 225 Pa·s of melt viscosity at 300°C at 1000 sec⁻¹ of shear rate, 19700 of viscosity average molecular weight; and Panlite CM1000, 90 Pa·s of melt viscosity at 300°C at 1000 sec⁻¹ of shear rate, 16000 of viscosity averagemolecularweight; each manufactured by Teijin Chemicals Ltd.). From the pellet-blend, polycarbonate resins having the respective melt viscosities given in Table 1 were prepared. To these polycarbonate resins, there were added a liquid crystalline polymer (A950, manufactured by Polyplastics Co., Ltd.) and a distearylhydrogen phosphite (JP218SS, manufactured by Johoku Chemical Co., Ltd.) in respective amounts given in Table 1. Each of the mixture was melted and kneaded at 300°C of resin temperature in a 30 mm twin-screw extruder to pelletize, thus obtaining the respective target resin compositions.

During the extrusion stage, care was taken not to become oxidizing condition caused by invasion of air into the kneaded material, and the target resin composition was prepared while the volatile matter was being removed from a vent by pressure-reducing operation.

Then, evaluations described below were given to resin composition obtained.

### (Melt viscosity)

The melt viscosity was determined by a capillary rheometer with a nozzle having 1 mm in inner diameter and 20 mm in length, at 300°C at 1000 sec⁻¹ of shear rate.

### (Delamination test)

From the above pellets, test pieces having 0.8 mm in thickness were molded using an injection molding machine at 300°C of resin temperature. Then, delamination test was conducted by sticking an adhesive tape to one side surface of the test piece followed by peeling the tape. After the delamination test, the area of delaminated portion was measured using an image processor (LUZEX-FS, manufactured by Nireco Corporation), and the (Area of delaminated portion)/(Area of test piece) was calculated. The smaller value of the (Area of delaminated portion) / (Area of test piece) is, the smaller area of delaminated portion is. It means excellent delamination characteristics.

### (Weld strength)

From the above pellets, pieces with a weld line having 0.8 mm in thickness were molded using an injection molding machine at 300°C of resin temperature. Then, the flexural strength on the weld line was determined in accordance with ISO 178.

### (Bar flow length)

Bar flow molds having 5 mm in width and 0.3 mm in thickness were molded at 300°C of resin temperature under 200 MPa of injection pressure, and the flow length thereof was determined.

### (Flexural modulus)

From the above pellets, test pieces having 0.8 mm in thickness were molded using an injection molding machine at 300°C of resin temperature. Then, the flexural modulus was determined in accordance with ISO 178 D 790.

### (Particle diameter of liquid crystalline polymer)

From the test piece with the weld line having 0.8 mm in thickness, thin pieces having 0.5 µm in thickness were cut along the flow direction. The liquid crystalline polymer particles therein were observed using a polarization microscope. Using an image processor (UZEX-FS, manufactured by Nireco Corporation), the average major diameter of particles was measured.

### Comparative Examples 1 to 5

There were prepared resin compositions for the cases given in Table 1: the case in which the additive amount of liquid crystalline polymer exceeded the specified range of the present invention, (Comparative Example 1); the case in which the ratio of melt viscosity of the polycarbonate resin to the liquid crystalline polymer did not satisfy the specified range of the present invention, (Comparative Examples 2, 3, and 5, (the ≽polycarbonate resin used in Comparative Example 5 was LEXAN 141 manufactured by General Electric, used in the example of JP-A 2002-249656)); and the case of not adding the liquid crystalline polymer, (Comparative Example 4). Evaluation was conducted to thus prepared resin compositions.

**Table 1**

| | Examples | | | | | Comparative Examples | | | | |
|---|---|---|---|---|---|---|---|---|---|---|
| | 1 | 2 | 3 | 4 | 5 | 1 | 2 | 3 | 4 | 5 |
| (A) Polycarbonate resin (parts by weight) | 95 | 97 | 95 | 92 | 95 | 90 | 95 | 95 | 100 | 95 |
| Melt viscosity (Pa·s) | 160 | 170 | 170 | 170 | 180 | 170 | 150 | 200 | 170 | 340 |
| Viscosity average molecular weight^{*} | 17850 | 18220 | 18220 | 18220 | 18590 | 18220 | 17480 | 19700 | 18220 | - |
| (B) Liquid crystalline polymer (parts by weight) | 5 | 3 | 5 | 8 | 5 | 10 | 5 | 5 | 6 | 5 |
| Melt viscosity (Pa·s) | 48 | 48 | 48 | 48 | 48 | 48 | 48 | 48 | - | 48 |
| (C) Distearylhydrogen phosphite (parts by weight) | 0.1 | 0.1 | 0.1 | 0.1 | 0.1 | 0.1 | 0.1 | 0.1 | - | 0.1 |
| Melt viscosity ratio (Aη)/(Bη) | 3.3 | 3.5 | 3.5 | 3.5 | 3.8 | 3.5 | 3.1 | 4.2 | - | 7.1 |
| Delamination area (%) | 0.2 | 0.2 | 0.5 | 1.5 | 0.9 | 35 | 0.2 | 40 | - | 47 |
| Weld strength (MPa) | 80 | 83 | 83 | 84 | 82 | 60 | 58 | 80 | 80 | 80 |
| Bar flow length (mm) | 27 | 23 | 25 | 27 | 23 | 29 | 29 | 20 | 15 | 5 |
| Flexural modulus (MPa) | 2900 | 2800 | 3000 | 3500 | 3200 | 3600 | 2800 | 3300 | 2000 | 2900 |
| Average major diameter of liquid crystalline polymer (µm) | 2.3 | 1.5 | 2.3 | 2.5 | 2.3 | >30 | 2.5 | >30 | - | >30 |

| | | | | | | | | | | |
|---|---|---|---|---|---|---|---|---|---|---|
| * Calculated from the mixing ratio of two kinds of polycarbonate resins. | | | | | | | | | | |

### Examples 6 to 10

Following-given evaluations were conducted to the resin compositions used in Examples 1 to 5.

### (Melt viscosity)

Measurement was performed similar to Example 1.

### (Molding peak pressure)

Molded articles (one-point pin gate) each having a rectangular face of 65 mm in length, 45 mm in width, and 0.3 mm in thickness, and having a rectangular opening having 61 mm in length and 41 mm in width at the central part thereof, were molded by an injection molding machine (SE30D, manufactured by Sumitomo Heavy Industries, Ltd.) at 300°C of resin temperature, 80°C of mold temperature, and 200 mm/sec of injection speed. The molding peak pressure during the molding was determined. The lower molding peak pressure is, the more excellent moldability is.

### (Weld tear test)

The weld tear test was conducted to the molded article having above rectangular opening. A minor side of the molded article was fixed by a jig, while hooking opposite minor side. Then, the molded article was drawn at 5 mm/min of speed. The occurrence of fracture (crack) at the weld part was evaluated. The evaluation apparatus adopted was Tensilon UTA-KN, manufactured by Orientec Co., Ltd.

### (Delamination test)

The molded article having above rectangular opening was immersed in 200 ml distilled water. Ultrasonic cleaning was applied to the molded article using Ultrasonic Washer W-115, manufactured by Honda Electronics Co., Ltd., under a condition of 45 kHZ, 300 W, for 1 minute. After the cleaning, occurrence of fluffing caused by the surface layer delamination of the molded article was observed.

### (Flexural modulus)

Measurement was performed similar to Example 1.

### Comparative Examples 6 to 11

The respective target resin compositions were prepared at the rate of respective mixing given in Table 2, similar to Example 1. The molded articles were formed from thus prepared respective resin compositions similar to Example 6.

### Evaluation was conducted to the molded articles.

The results of the evaluations are given in Table 2.

**tABLE 2**

| | Examples | | | | | Comparative Examples | | | | | |
|---|---|---|---|---|---|---|---|---|---|---|---|
| | 6 | 7 | 8 | 9 | 10 | 6 | 7 | 8 | 9 | 10 | 11 |
| (A) Polycarbonate resin (parts by weight) | 95 | 97 | 95 | 92 | 95 | 90 | 95 | 95 | 100 | 95 | 95 |
| Melt viscosity (Pa·s) | 160 | 170 | 170 | 170 | 180 | 170 | 150 | 200 | 170 | 340 | 90 |
| Viscosity average molecular weight* | 17850 | 18220 | 18220 | 18220 | 18590 | 18220 | 17480 | 19700 | 18220 | - | 16000 |
| (B) Liquid crystalline polymer (parts by weight) | 5 | 3 | 5 | 8 | 5 | 10 | 5 | 5 | - | 5 | 5 |
| Melt viscosity (Pa·s) | 48 | 48 | 48 | 48 | 48 | 48 | 48 | 48 | - | 48 | 48 |
| (C) Distearylhydrogen phosphite (parts by weight) | 0.1 | 0.1 | 0.1 | 0.1 | 0.1 | 0.1 | 0.1 | 0.1 | - | 0.1 | 0.1 |
| Melt viscosity ratio (Aη)/(Bη) | 3.3 | 3.5 | 3.5 | 3.5 | 3.8 | 3.5 | 3.1 | 4.2 | - | 7.1 | 1.9 |
| Peak pressure (MPa) | 120 | 160 | 140 | 120 | 160 | 100 | 110 | 220 | 250 | Not filled | 90 |
| Crack on the weld line | No | No | No | No | No | Yes | Yes | No | No | - | Yes |
| Surface layer delamination | No | No | No | No | No | Yes | No | Yes | No | - | No |
| Flexural modulus (MPa) | 2900 | 2800 | 3000 | 3500 | 3200 | 3600 | 2800 | 3300 | 2000 | 2900 | 3300 |

| | | | | | | | | | | | |
|---|---|---|---|---|---|---|---|---|---|---|---|
| * Calculated from the mixing ratio of two kinds of polycarbonate resins. | | | | | | | | | | | |

### Examples 11 to 20

From the resin compositions of Examples 1 to 5, two kinds of molded articles described below were formed. To molded articles formed, the molding peak pressure, the weld tear test, and the delamination test were conducted.

### Molded article A (Examples 11 to 15, Table 3)

Using an injection molding machine (ROBOSHOTS-2000i30A, manufactured by FANUC LTD.), a rectangular-shape molded article (side gate) having 40 mm in length, 25 mm in width, and 0.18 mm in thickness was formed by a single-cavity mold at 300°C of resin temperature, 80°C of mold temperature, and 400 mm/sec of injection speed. The molding peak pressure during the molding was determined. Lower molding peak pressure gives further excellent moldability.

### Molded article B (Examples 16 to 20, Table 4)

Using an injection molding machine (SE130D-HP-C360M, manufactured by Sumitomo Heavy Industries Ltd.), a rectangular-shape molded article (side gate) having 21 mm in length, 18 mm in width, and 0.15 mm in thickness was formed by eight-cavities mold at 300°C of resin temperature, 80°C of mold temperature, and 600 mm/sec of injection speed. The molding peak pressure during the molding was determined.

### (Melt viscosity)

Measurement was performed similar to Example 1.

### (Weld tear test)

The weld tear test was conducted to the molded article having above rectangular opening. A minor side of the molded article was fixed by a jig, while hooking opposite minor side. Then, the molded article was drawn at 5 mm/min of speed. The occurrence of fracture (crack) at the weld part was evaluated. The evaluation apparatus adopted was Tensilon UTA-KN, manufactured by Orientec Co., Ltd.

### (Delamination test)

The delamination test was conducted by sticking an adhesive tape to a surface of the above rectangular molded article followed by peeling the tape. After the delamination test, the area of delaminated portion was measured using an image processor (LUZEX-FS, manufactured by Nireco Corporation), and the (Area of delaminated portion) / (Area of test piece) was calculated. The smaller value of the (Area of delaminated portion)/(Area of test piece) is, the smaller area of delaminated portion is. It means excellent delamination characteristics.

### (Flexural modulus)

Measurement was performed similar to Example 1.

### Comparative Examples 12 to 17

The respective target resin compositions were prepared at the respective mixing rates given in Table 3 similar to Example 1. From thus prepared resin compositions, the respective molded articles A were formed similar to Example 11, and were evaluated.

### Comparative Examples 18 to 23

Using the respective resin compositions prepared by Comparative Examples 12 to 17, the respective molded articles B were formed similar to Example 16. Evaluation was conducted to these molded articles B.

The results of the evaluations are given in Table 3 and Table 4.

**Table 3**

| | Examples | | | | | Comparative Examples | | | | | |
|---|---|---|---|---|---|---|---|---|---|---|---|
| | 11 | 12 | 13 | 14 | 15 | 12 | 13 | 14 | 15 | 16 | 17 |
| (A) Polycarbonate resin (parts by weight) | 95 | 97 | 95 | 92 | 95 | 90 | 95 | 95 | 100 | 95 | 95 |
| Meltviscosity (Pa·s) | 160 | 170 | 170 | 170 | 180 | 170 | 150 | 200 | 170 | 340 | 90 |
| Viscosity average molecular weight* | 17850 | 18220 | 18220 | 18220 | 18590 | 18220 | 17480 | 19700 | 18220 | - | 16000 |
| (B) Liquid crystalline polymer (parts by weight) | 5 | 3 | 5 | 8 | 5 | 10 | 5 | 5 | - | 5 | 5 |
| Melt viscosity (Pa·s) | 48 | 48 | 48 | 48 | 48 | 48 | 48 | 48 | - | 48 | 48 |
| (C) Distearylhydrogen phosphite (parts by weight) | 0.1 | 0.1 | 0.1 | 0.1 | 0.1 | 0.1 | 0.1 | 0.1 | - | 0.1 | 0.1 |
| Melt viscosity ratio (Aη)/(Bη) | 3.3 | 3.5 | 3.5 | 3.5 | 3.8 | 3.5 | 3.1 | 4.2 | - | 7.1 | 1.9 |
| Peak pressure (MPa) | 200 | 240 | 220 | 200 | 240 | 180 | 190 | 300 | 330 | Not filled | 170 |
| Crack on the weld line | No | No | No | No | No | Yes | Yes | No | No | - | Yes |
| Delamination area (%) | 0.2 | 0.2 | 0.5 | 1.5 | 0.9 | 35 | 1.5 | 0.5 | - | 6 | 0.2 |
| Flexural modulus (MPa) | 2900 | 2800 | 3000 | 3500 | 3200 | 3600 | 2800 | 3300 | 2000 | 2900 | 3300 |

| | | | | | | | | | | | |
|---|---|---|---|---|---|---|---|---|---|---|---|
| * Calculated from the mixing ratio of two kinds of polycarbonate resins. | | | | | | | | | | | |

**Table 4**

| | Examples | | | | | Comparative Examples | | | | | |
|---|---|---|---|---|---|---|---|---|---|---|---|
| | 16 | 17 | 18 | 19 | 20 | 18 | 19 | 20 | 21 | 22 | 23 |
| (A) Polycarbonate resin (parts by weight) | 95 | 97 | 95 | 92 | 95 | 90 | 95 | 95 | 100 | 95 | 95 |
| Melt viscosity (Pa·s) | 160 | 170 | 170 | 170 | 180 | 170 | 150 | 200 | 170 | 340 | 90 |
| Viscosity average molecular weight* | 17850 | 18220 | 18220 | 18220 | 18590 | 18220 | 17480 | 19700 | 18220 | - | 16000 |
| (B) Liquid crystalline polymer (parts by weight) | 5 | 3 | 5 | 8 | 5 | 10 | 5 | 5 | - | 5 | 5 |
| Melt viscosity (Pa·s) | 48 | 48 | 48 | 48 | 48 | 48 | 48 | 48 | - | 48 | 48 |
| (C) Distearylhydrogen phosphite (parts by weight) | 0.1 | 0.1 | 0.1 | 0.1 | 0.1 | 0.1 | 0.1 | 0.1 | - | 0.1 | 0.1 |
| Melt viscosity ratio (Aη)/(Bη) | 3.3 | 3.5 | 3.5 | 3.5 | 3.8 | 3.5 | 3.1 | 4.2 | - | 7.1 | 1.9 |
| Peak pressure (MPa) | 110 | 150 | 130 | 110 | 150 | 90 | 100 | 210 | 240 | Not filled | 80 |
| Crack on the weld line | No | No | No | No | No | Yes | Yes | No | No | - | Yes |
| Delamination area (%) | 0.2 | 0.1 | 0.4 | 0.3 | 0.1 | 38 | 0.2 | 42 | - | - | 0.3 |
| Flexural modulus (MPa) | 2900 | 2800 | 3000 | 3500 | 3200 | 3600 | 2800 | 3300 | 2000 | 2900 | 3300 |

| | | | | | | | | | | | |
|---|---|---|---|---|---|---|---|---|---|---|---|
| * Calculated from the mixing ratio of two kinds of polycarbonate resins. | | | | | | | | | | | |

## Claims

1. A thermoplastic resin composition comprising: 100 parts by weight of a resin composition comprising (A) 91 to 99% by weight of a thermoplastic resin which shows 100 to 300 Pa·s of melt viscosity, determined by a capillary rheometer with a nozzle having 1 mm in inner diameter and 20 mm in length, at 300°C at 1000 sec⁻¹ of shear rate, and which does not form anisotropic melt phase, and (B) 1 to 9% by weight of a liquid crystalline polymer being capable of forming anisotropic melt phase; and 0.001 to 2 parts by weight of (C) one or two or more of phosphorus oxo acid monoester and diester, represented by the formulas (I) and (II), the (B) liquid crystalline polymer being dispersed as particles in the thermoplastic resin composition, and the thermoplastic resin composition having 3.2 to 4.0 of melt viscosity ratio of (A) component to (B) component, (Aη)/(Bη), determined by a capillary rheometer with a nozzle having 1 mm in inner diameter and 20 mm in length, at 300°C at 1000 sec⁻¹ of shear rate,
(X)ₙP(=O) (OR)₃₋ₙ (I)
(X)ₙP(OR)₃₋ₙ (II)
(in which: n is 1 or 2; X is a hydrogen atom, a hydroxyl group, or a monovalent organic group, plural X's may be the same as or different from one another; R is a mono- or di-valent organic group, plural R's may be the same as or different from one another).

2. The thermoplastic resin composition according to claim 1, wherein the (A) thermoplastic resin which does not form anisotropic melt phase is a polycarbonate resin.

3. The thermoplastic resin composition according to claim 2, wherein the (A) polycarbonate resin has the viscosity average molecular weight ranging from 17500 to 18900.

4. The thermoplastic resin composition according to any one of claims 1 to 3, wherein the (C) phosphorus oxo acid monoester and diester are each a phosphonic acid ester represented by the following formula (III):
H(OH)ₘP(=O)(OR')₂₋ₘ (III)
(in which m is 0 or 1, and R' is a monovalent organic group).

5. The thermoplastic resin composition according to any one of claims 1 to 4, wherein the (C) phosphorus oxo acid monoester or diester is a phosphonic acid ester represented by the following formula (IV): 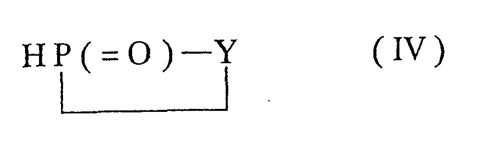 (in which Y is a divalent α,ω-dioxy organic group).

6. A molded article prepared by molding the thermoplastic resin composition according to any one of claims 1 to 5, in which the (B) liquid crystalline polymer is dispersed in an insular state in the (A) thermoplastic resin and the average major diameter of the (B) liquid crystalline polymer particles of the surface layer part within 50 µm depth from the surface of the molded article is 30 µm or smaller.

7. A liquid crystal display component, manufactured by injection-molding the thermoplastic resin composition according to any of claims 1 to 5, having 3.2 to 4.0 of melt viscosity ratio of (A) component to (B) component, (Aη)/(Bη), determined by a capillary rheometer with a nozzle having 1 mm in inner diameter and 20 mm in length, at 300°C at 1000 sec⁻¹ of shear rate, wherein the liquid crystal display component having a rectangular face has a thickness thereof ranging from 0.3 to 3 mm, and has a desired opening on the rectangular face at an opening area ratio to the total area of the rectangular face within the range of 30 to 95%.

8. The liquid crystal display component according to claim 7, comprising a molded article composed of the (B) liquid crystalline polymer dispersed in an insular state in the (A) thermoplastic resin, having 30 µm or smaller of the average major diameter of the (B) liquid crystalline polymer particles in the surface layer part within 50 µm depth from the surface of the molded article.

9. An information recording media component, manufactured by injection-molding the thermoplastic resin composition, according to any of claims 1 to 5, having 3.2 to 4.0 of melt viscosity ratio of (A) component to (B) component, (Aη)/(Bη), determined by a capillary rheometer with a nozzle having 1 mm in inner diameter and 20 mm in length, at 300°C at 1000 sec⁻¹ of shear rate, wherein the information recording media component has a rectangular face having a ratio of the miner side to the major side of the rectangular face within the range of 0. 3 to 1.0, and having a thickness thereof ranging from 0.3 to 3 mm.

10. The information recording media component according to claim 9, comprising a molded article composed of the (B) liquid crystalline polymer dispersed in an insular state in the (A) thermoplastic resin, in which the average major diameter of the (B) liquid crystalline polymer particles in the surface layer part within 50 µm depth from the surface of the molded article is 30 µm or smaller.
